(19) Europäisches Patentamt
European Patent Office
Office européen des brevets

(11) **EP 0 859 020 B1**

(12) **EUROPÄISCHE PATENTSCHRIFT**

(45) Veröffentlichungstag und Bekanntmachung des Hinweises auf die Patenterteilung:
**07.06.2006 Patentblatt 2006/23**

(51) Int Cl.:
**C08G 63/85** *(2006.01)*    **C08G 63/78** *(2006.01)*
**C08G 63/183** *(2006.01)*    **C08L 67/02** *(2006.01)*

(21) Anmeldenummer: **98101696.7**

(22) Anmeldetag: **02.02.1998**

(54) **Verfahren zur Herstellung von Polypropylenterephthalat**

Process for the production of polypropylene terephthalate

Procédé pour la production de polyterephtalate de propylène

(84) Benannte Vertragsstaaten:
**AT BE DE ES FI FR GB IE IT NL PT**

(30) Priorität: **12.02.1997 DE 19705249**

(43) Veröffentlichungstag der Anmeldung:
**19.08.1998 Patentblatt 1998/34**

(73) Patentinhaber:
• **Zimmer Aktiengesellschaft**
  **60388 Frankfurt am Main (DE)**
• **Degussa AG**
  **40474 Düsseldorf (DE)**

(72) Erfinder:
• **Schmidt, Wolfgang, Dr.**
  **63571 Gelnhausen (DE)**
• **Thiele, Ulrich, Dr.**
  **63486 Bruchköbel (DE)**
• **Schauhoff, Stephanie, Dr.**
  **60385 Frankfurt/Main (DE)**
• **Yu, Dahai, Dr.**
  **63619 Bad Orb (DE)**

(56) Entgegenhaltungen:
**EP-A- 0 699 700**    **EP-A- 0 736 560**
**WO-A-98/23662**    **US-A- 5 459 229**

EP 0 859 020 B1

**Beschreibung**

Die vorliegende Erfindung betrifft die Herstellung von Polypropylenterephthalat aus Terephthalsäure und 1,3-Propandiol.

Polypropylenterephthalat ist, nachdem 1,3-Propandiol nunmehr zu günstigen Preisen großtechnisch verfügbar ist, ein zukunftsweisender Kunststoff mit einer langkettigen Zickzack-Molekülstruktur und Eigenschaften, die größtenteils zwischen denen von Polyethylenterephthalat und Polybutylenterephthalat liegen. Anwendungsgebiete sind bevorzugt der gesamte Faserbereich sowie Formkörper.

In der Literatur wird die Herstellung von Polypropylenterephthalat auf der Basis von Dimethylterephthalat unter Verwendung üblicher Katalysatoren beschrieben (US-Patente 2 465 319, 4 611 049 und 5 340 909, DE-Offenlegungsschrift 1 954 527). Das einzige Beispiel zur Herstellung von Polypropylenterephthalat auf Terephthalsäurebasis ist im US-Patent 5 340 909 angeführt. Hiernach werden 1,3-Propandiol und Terephthalsäure ohne Katalysator oder in Gegenwart einer organischen Titan- oder Zinn-Verbindung verestert und nachfolgend in Gegenwart eines Zinn-Katalysators polykondensiert.

Durch thermische Zersetzung werden während der Polypropylenterephthalat-Herstellung zwangsläufig Acrolein und Allylalkohol als Nebenprodukte gebildet, welche teils mit den Polykondensations-Brüden ausgetragen werden (US-Patente 4 611 049 und 5 459 229), teils im Polymer verbleiben. Beide Verbindungen sind sehr giftig (Acrolein MAK-Wert 0,1 ppm) und reizen Augen und Schleimhäute.

Aufgabe der vorliegenden Erfindung ist daher die Minimierung des Acrolein- und Allylalkohol-Gehaltes von Polypropylenterephthalat. Insbesondere ist es die Aufgabe der Erfindung, ein Verfahren aufzuzeigen, welches die Herstellung von Polypropylenterephthalat mit einem geringeren Acrolein- und Allylalkohol-Gehalt als Polymere gemäß dem Stand der Technik, ausgehend von Terephthalsäure, ermöglicht. Desweiteren sollte Polypropylenterephthalat mit einer neutralen, bläulich-weißen Farbe herstellbar sein.

Die Lösung dieser Aufgabe erfolgt erfindungsgemäß durch ein Verfahren gemäß den Angaben der Patentansprüche. Kennzeichnend für dieses Verfahren ist, daß das Polypropylenterephthalat nicht mehr als 5 ppm Acrolein und nicht mehr als 3 ppm Allylalkohol enthält und durch Direkt-Veresterung in Gegenwart von 30 bis 200 ppm Titan in Form eines mindestens 50 Mol-% $TiO_2$-Präzipitat enthaltenden anorganischen Veresterungskatalysators, Blockierung des Veresterungskatalysators nach der Veresterung durch Zusatz von 10 bis 100 ppm Phosphor in Form einer Phosphor-Sauerstoff-Verbindung und nachfolgende Vorkondensation und Polykondensation in Gegenwart von 100 bis 300 ppm Antimon in Form eines üblichen Antimon-Polykondensationskatalysators und wahlweise üblichen Farbtönern erhalten wird.

Ausgangsprodukte sind Terephthalsäure und 1,3-Propandiol in der für Polyester üblichen Qualität. Terephthalsäure und 1,3-Propandiol können bis zu insgesamt 15 Mol-% durch andere Dicarbonsäuren und/oder andere Diole ersetzt sein. Als solche kommen beispielsweise 2,6-Naphthalindicarbonsäure, 1,4-Cyclohexandicarbonsäure, p-Hydroxybenzoesäure, 4,4'-Biphenyldicarbonsäure, Ethylenglycol, 1,2-Propandiol, 1,4-Butandiol, Diethylenglykol, Dipropylenglykol und/oder 1,4-Cyclohexandimethanol in Betracht.

Die Veresterung der Terephthalsäure mit dem 1,3-Propandiol erfolgt in Gegenwart von 30 bis 200 ppm, vorzugsweise 50 bis 100 ppm Titan in Form eines mindestens 50 Mol-% $TiO_2$-Präzipitat enthaltenden anorganischen Veresterungskatalysators. Erfindungsgemäß darf der Veresterungskatalysator Titan nur in Form von $TiO_2$ enthalten, nicht aber in Form von beispielsweise organischen Titanestern.

Der Veresterungskatalysator ist ein Titandioxid/Siliciumdioxid-Copräzipitat mit 50 bis 99 Mol-% $TiO_2$. Derartige Copräzipitate sind in den Patent-Anmeldungen WO 95/18839 und EP 0 716 112 A beschrieben, werden da aber ausschließlich als Polykondensationskatalysatoren verwendet.

Entscheidend für die Erzielung des erfindungsgemäß niedrigen Acrolein- und Allylalkohol-Gehaltes des Polypropylenterephthalates ist die Inaktivierung oder Blockierung des Veresterungskatalysators nach Abschluß der Veresterung und vor Beginn der Polykondensation, vorzugsweise zu Beginn der Vorkondensation, durch Zusatz von 10 bis 100 ppm, vorzugsweise 20 bis 60 ppm Phosphor in Form einer Phosphor-Sauerstoff-Verbindung, wie phosphorige Säure, Phosphorsäure, Phosphonsäure, Carboxyphosphonsäure und deren Verbindungen. Hierin unterscheidet sich das vorliegende Verfahren grundlegend von den Verfahren des genannten Standes der Technik.

Die Vorkondensation und Polykondensation erfolgen in Gegenwart von 100 bis 300 ppm, vorzugsweise 200 bis 250 ppm Antimon in Form eines üblichen polyesterlöslichen Antimon-Polykondensationskatalysators, beispielsweise Antimontriacetat. Die Zugabe des Polykondensationskatalysators kann gleichzeitig zur Zugabe der Phosphor-Verbindung vorgenommen werden, erfolgt aber bevorzugt erst unmittelbar nach Abschluß dieser, insbesondere dann wenn Polymere mit besonders guter Transparenz gewünscht sind.

Je nach Verwendungszweck sollte das Polypropylenterephthalat eine neutrale, bläulich-weiße Farbe aufweisen, entsprechend einem CIELAB-Farbwert b* im Bereich von -4,0 bis +4,0. In diesem Fall wird dem Reaktionsgemisch zu einem beliebigen Zeitpunkt vor Abschluß der Polykondensation, vorzugsweise entweder zu Beginn der Veresterung oder gegen Ende der Polykondensation, ein Farbtöner, vorzugsweise 20 bis 60 ppm, insbesondere 30 bis 50 ppm Cobalt in Form einer polyesterlöslichen Cobaltverbindung, wie Cobaltacetat, zugesetzt.

Die Temperatur- und Druckbedingungen der Veresterung, Vorkondensation und Polykondensation entsprechen den aus dem Stand der Technik bekannten. Gegebenenfalls kann im Anschluß an die Schmelze-Polykondensation und Granulierung noch eine Festphasenpolykondensation erfolgen. Auch der Zusatz üblicher Additive, wie Farbstoffe, Mattierungsmittel, Gleitmittel, Vernetzungsmittel usw. ist möglich.

Die Erfindung wird nachfolgend an Hand von Beispielen näher erörtert, ohne diese jedoch in irgendeiner Weise zu beschränken.

Die angegebenen Polypropylenterephthalat-Kennwerte wurden dabei, wie folgt, bestimmt:

Die Intrinsic-Viskositäten (I.V.) wurden an einer Lösung von 0,5 g Polyester in 100 ml eines Gemisches aus Phenol und 1,2-Dichlorbenzol (3 : 2 Gew.-Teile) bei 25 °C bestimmt.

Die COOH-Endgruppen-Konzentration wurde durch photometrische Titration mit 0,05 n ethanolischer Kalilauge gegen Bromthymolblau einer Lösung des Polyesters in einem Gemisch aus o-Kresol und Chloroform (70 : 30 Gew.-Teile) bestimmt.

Die Messung der CIELAB-Farbwerte erfolgte an im Trockenschrank bei 150 ± 5 °C während 1 h kristallisiertem Polyestergranulat. Die Farbwerte wurden ermittelt, indem in einem Dreibereichsfarbmeßgerät der Farbton der Polyesterprobe mit drei Fotozellen, denen je ein Rot-, Grün- bzw. Blau-Filter vorgeschaltet ist, gemessen wurde (X-, Y- und Z-Werte). Die Auswertung erfolgte nach CIELAB, wobei:

$$b* = 200 \cdot \left( \sqrt[3]{\frac{Y}{100}} - \sqrt[3]{\frac{Z}{118,22}} \right)$$

Der Gehalt an freiem, im Polyester physikalisch gelöstem Acrolein und Allylalkohol wurde wie folgt bestimmt: Der zu analysierende Polyester wurde nach Abkühlung mit flüssigem Stickstoff gemahlen und die Siebfraktion kleiner als 0,4 mm für die Analyse verwendet. 2,0 g der zu bestimmenden Polyesterprobe wurden in eine 20-ml-Flasche mit Septum gegeben, die Flasche verschlossen und während 60 min bei 170 °C gehalten. Durch das Septum wurde dem Gasraum der Flasche eine Probe entnommen und der Acrolein- und Allylalkohol-Gehalt gaschromatographisch bestimmt.

Vergleichsbeispiele 1 bis 4 und Beispiele 5 bis 7:

1 Gew.-Teil Terephthalsäure wurde mit den in der Tabelle angegebenen Gew.-Teilen 1,3-Propandiol (1,3-PD) zu einer Paste vermengt und zusammen mit dem Veresterungskatalysator und gegebenenfalls Cobaltacetat-tetrahydrat als Farbtöner in vorgelegtes Veresterungsprodukt aus einer vorangehenden gleichartigen Charge eingespeist. Bei den Vergleichsbeispielen 3 und 4 wurde außerdem der Polykondensations-Katalysator zugegeben. Das Gemisch wurde bis zur deutlichen Abnahme des Reaktionswasseranfalls (Veresterungsgrad mindestens 98,8 %) verestert.

Im Vergleichsbeispiel 1, 3 und 4 wurde nach Abschluß der Veresterung sofort die Vorkondensation eingeleitet, während im Vergleichsbeispiel 2 vor der Vorkondensation noch der Polykondensations-Katalysator zugegeben wurde. In den Beispielen 5 bis 7 wurde nach Abschluß der Veresterung dem Reaktionsgemisch zunächst Phosphorsäure zugesetzt und anschließend, vor Beginn der Vorkondenation der Polykondensationskatalysator. Im Beispiel 7 wurden hier nur ca. 150 ppm Antimon zugesetzt und die restlichen ca. 100 ppm zu einem deutlich späteren Zeitpunkt nachgespeist.

Nach einer ca. 40-minütigen Vorkondensation bei einem Druck von 100 bis 50 mbar (abs.) wurde durch Absenken des Vakuums auf weniger als 1 mbar die Polykondensation (PK) eingeleitet. Die Polykondensationstemperatur betrug 257 bis 265 °C, mit Ausnahme der Vergleichsbeispiele 2 und 3 bei denen sie ca. 270 °C, respektive 260 bis 270 °C betrug. Die in der Tabelle angegebene Polykondensationsdauer entspricht der unter den gegebenen Bedingungen maximal möglichen Viskosität des Polymeren, d. h. bei darüber hinausgehender Fortsetzung der Polykondensation würde die Intrinsic-Viskosität (I.V.) des Polymeren infolge des Überwiegens von Zersetzungsreaktionen wieder abnehmen.

Die sonstigen Bedingungen und die Qualitätswerte des erhaltenen Polypropylenterephthalates sind in nachfolgender Tabelle zusammengestellt.

Tabelle:

| Beisp. Nr. | 1,3-PD Gew.-Tle. | VE-Katalysator Art | ppm Ti | Farbtöner ppm Co | $H_3PO_4$ ppm P | PK-Katatysator Art | ppm Sb od. Ti | PK-Dauer min | I.V. dl/g | COOH meq/kg | Acrolein ppm | Allylalk. ppm | b* |
|---|---|---|---|---|---|---|---|---|---|---|---|---|---|
| 1 | 0,567 | $TiO_2$:$SiO_2$ | 50 | - | - | - | - | 171 | 0,926 | 14 | 10 | 1,7 | 10,4 |
| 2 | 0,641 | $TiO_2$ | 150 | - | - | $TiO_2$ | 130 | 120 | 0,802 | 23 | > 10 | | 3,2 |
| 3 | 0,656 | $Ti(OBu)_4$ | 75 | - | - | $SbAc_3$ | 200 | 67 | 0,890 | 10 | 40 | 3,8 | 10,7 |
| 4 | 0,567 | $TiO_2$:$SiO_2$ | 50 | - | - | $SbAc_3$ | 200 | 113 | 0,918 | 14 | 11 | 1,4 | 8,8 |
| 5 | 0,567 | $TiO_2$:$SiO_2$ | 50 | 20 | 40 | $SbAc_3$ | 200 | 163 | 0,919 | 17 | 5 | 1,7 | 5,9 |
| 6 | 0,567 | $TiO_2$:$SiO_2$ | 50 | 40 | 40 | $SbAc_3$ | 250 | 162 | 0,912 | 19 | 4 | 2,0 | -0,5 |
| 7 | 0,567 | $TiO_2$:$SiO_2$ | 50 | 40 | 60 | $SbAc_3$ | 250 | 153 | 0,635 | 16 | 3 | 2,4 | -1,2 |

$TiO_2$:$SiO_2$ = Titandioxid-Siliciumdioxid-Copräzipitat mit 80 Mol-% $TiO_2$, Lieferant Akzo (DE)

$TiO_2$ = hydratisiertes Titandioxid mit ca. 2 Gew.-% Na und ca. 6 Gew-% Wasser, Lieferant Sachtleben Chemie (DE)

$Ti(OBu)_4$ = Titantetrabutylat

$SbAc_3$ = Antimontriacetat

Wie aus der Tabelle ersichtlich führt Titantetrabutylat (Vergleichsbeispiel 3) zu gelblich verfärbten Produkten mit hohem Acrolein- und Allylalkohol-Gehalt. Außerdem verläuft die Veresterung langsamer als bei Einsatz der erfindungsgemäßen Titandioxid-Präzipitat-Katalysatoren. Von den erfindungsgemäßen Katalysatoren weist das Titandioxid/Siliciumdioxid-Copräzipitat eine höhere katalytische Aktivität auf, führt aber (ohne Zusatz eines Farbtöners) zu einer stärkeren Polymer-Verfärbung, als das reine Titandioxid-Präzipitat (Vergleichsbeispiel 2). Durch Zusatz einer geeigneten Menge eines Farbtöners läßt sich die Verfärbung aber korrigieren, so daß Polyester mit b*-Farbwerten von weniger als +0,5 ohne Probleme hergestellt werden können (Beispiele 6 und 7).

Der mit den erfindungsgemäßen Veresterungs-Katalysatoren ohne Inaktivierung des Katalysators vor der Polykondensation erzielbare Allylalkohol-Gehalt ist - unabhängig von der Art des PolykondensationsKatalysators - befriedigend, während der Acrolein-Gehalt zwar niedriger als bei Einsatz von Titantetrabutylat ist, aber mit mindestens 10 ppm Acrolein noch recht hoch (Vergleichsbeispiele 1, 2 und 4). Um Polypropylenterephthalat mit nicht mehr als 5 ppm Acrolein zu erhalten, muß der erfindungsgemäße Veresterungs-Katalysator auf $TiO_2$-Basis vor der Polykondensation durch Zugabe einer Phosphor-Sauerstoff-Verbindung vollständig blockiert werden (Beispiel 5 gegenüber Vergleichsbeispiel 4) und der Polykondensationskatalysator titan-frei sein.

## Patentansprüche

1. Verfahren zur Herstellung von Polypropylenterephthalat durch Direktveresterung von Terephthalsäure mit 1,3-Propandiol und nachfolgende Vorkondensation und Polykondensation, **dadurch gekennzeichnet, dass** das Polypropylenterephthalat nicht mehr als 5 ppm Acrolein und nicht mehr als 3 ppm Allylalkohol enthält und durch Veresterung in Gegenwart eines Veresterungskatalysators mit 30 bis 200 ppm Titan in Form eines 50 bis 99 Mol% $TiO_2$-Präzipitat enthaltenden Titandioxid/Siliciumdioxid-Copräzipitates, Blockierung des Veresterungskatalysators nach der Veresterung durch Zusatz von 10 bis 100 ppm Phosphor in Form einer Phosphor-Sauerstoff-Verbindung und nachfolgende Vorkondensation und Polykondensation in Gegenwart von 100 bis 300 ppm Antimon in Form eines üblichen Antimon-Polykondensationskatalysators, und wahlweise Zusatz zu einem beliebigen Zeitpunkt von üblichen Farbtönern, erhalten wird.

2. Verfahren gemäß Anspruch 1, **dadurch gekennzeichnet, dass** der Farbtöner aus 20 bis 60 ppm Cobalt in Form einer polyesterlöslichen Cobaltverbindung besteht.

3. Verfahren gemäß Anspruch 1 oder 2, **dadurch gekennzeichnet, dass** der Polykondensationskatalysator nach Abschluß der Zugabe der Phosphorverbindung zugesetzt wird.

4. Verfahren gemäß einem der Ansprüche 1 bis 3, **dadurch gekennzeichnet, dass** das Polypropylenterephthalat ein Copolyester mit insgesamt bis zu 15 Mol-% anderer Dicarbonsäuren und/oder anderer Diole ist.

## Claims

1. Process for the production of polypropylene terephthalate by the direct esterification of terephthalic acid with 1,3-propanediol and subsequent precondensation and polycondensation, **characterised in that** the polypropylene terephthalate contains no more than 5 ppm acrolein and no more than 3 ppm allyl alcohol, and is obtained by esterification in the presence of an esterification catalyst with 30 to 200 ppm titanium in the form of a titanium dioxide/silicon dioxide coprecipitate containing a 50 to 99 mol % $TiO_2$ precipitate, blocking the esterification catalyst after esterification by adding 10 to 100 ppm phosphorus in the form of a phosphorus-oxygen compound, and subsequent precondensation and polycondensation in the presence of 100 to 300 ppm antimony, in the form of a conventional antimony polycondensation catalyst and optionally adding conventional colourants at any point in time.

2. Process according to claim 1, **characterised in that** the colourant consists of 20 to 60 ppm cobalt in the form of a polyester-soluble cobalt compound.

3. Process according to claim 1 or 2, **characterised in that** the polycondensation catalyst is added after completing the addition of the phosphorus compound.

4. Process according to one of claims 1 to 3, **characterised in that** polypropylene terephthalate is a copolyester with a total of up to 15 mol % other dicarboxylic acids, and/or other diols.

**Revendications**

1. Procédé, pour la préparation d'un téréphtalate de polypropylène par estérification directe de l'acide téréraphtalique à l'aide du 1,3-propanediol suivie d'une condensation préalable et d'une polycondensation, ce procédé **se caractérisant en ce que** le téréphtalate de polypropylène ne contient pas plus de 5 ppm d'acroléine et pas plus de 3 ppm d'alcool allylique et est obtenu par estérification en présence d'un catalyseur d'estérification contenant 30 à 200 ppm de titane sous forme d'un coprécipité dioxyde de titane/silice contenant 50 à 99 mol % de $TiO_2$ précipité, blocage du catalyseur d'estérification après l'estérification par addition de 10 à 100 ppm de phosphore sous la forme d'un dérivé oxygéné du phosphore puis condensation préalable et polycondensation en présence de 100 à 300 ppm d'antimoine sous la forme d'un catalyseur usuel de polycondensation à base d'antimoine, avec addition éventuelle, à un moment quelconque, de colorants usuels.

2. Procédé selon la revendication 1, **caractérisé en ce que** le colorant consiste en 20 à 60 ppm de cobalt sous forme d'un dérivé du cobalt soluble dans les polyesters.

3. Procédé selon la revendication 1 ou 2, **caractérisé en ce que** le catalyseur de polycondensation est ajouté après l'addition de la totalité du dérivé du phosphore.

4. Procédé selon l'une des revendications 1 à 3, **caractérisé en ce que** le téréphtalate de polypropylène est un copolyester contenant au total jusqu'à 15 mol % d'autres acides dicarboxyliques et/ou d'autres diols.